Europäisches Patentamt

European Patent Office

Office européen des brevets

(19)

(11) **EP 1 074 143 B1**

(12) **EUROPÄISCHE PATENTSCHRIFT**

(45) Veröffentlichungstag und Bekanntmachung des Hinweises auf die Patenterteilung:
**28.11.2001 Patentblatt 2001/48**

(21) Anmeldenummer: **99924766.1**

(22) Anmeldetag: **03.04.1999**

(51) Int Cl.⁷: **H04N 1/415**, H04N 1/64

(86) Internationale Anmeldenummer:
**PCT/DE99/01016**

(87) Internationale Veröffentlichungsnummer:
**WO 99/55075 (28.10.1999 Gazette 1999/43)**

(54) **VERFAHREN ZUR BILDDATENKOMPRIMIERUNG FÜR ZWEI-FARBEN-BILDER**

METHOD FOR COMPRESSING IMAGE DATA FOR BICOLOR IMAGES

PROCEDE DE COMPRESSION DE DONNEES D'IMAGES POUR IMAGES BICOLORES

(84) Benannte Vertragsstaaten:
**DE FR GB IT NL**

(30) Priorität: **21.04.1998 DE 19817720**

(43) Veröffentlichungstag der Anmeldung:
**07.02.2001 Patentblatt 2001/06**

(73) Patentinhaber: **Heidelberger Druckmaschinen Aktiengesellschaft**
**69115 Heidelberg (DE)**

(72) Erfinder:
- **WEINHOLZ, Peter**
  **D-24105 Kiel (DE)**
- **SIEMSEN, Eike**
  **D-24113 Kiel (DE)**

(56) Entgegenhaltungen:
**EP-A- 0 491 556     US-A- 5 267 333**
**US-A- 5 706 368**

**Beschreibung**

Die Erfindung bezieht sich auf das Gebiet der digitalen Bildverarbeitung und betrifft ein Verfahren zur Komprimierung der Bilddaten eines digital erzeugten oder gespeicherten Bildes auf eine reduzierte Datenmenge. Komprimierungsverfahren für Bilddaten werden in vielen Anwendungsgebieten der digitalen Bildverarbeitung verwendet, um durch die reduzierte Datenmenge Speicherplatz, Datenübertragungszeit, Verarbeitungszeit und damit Kosten einzusparen.

Ein wichtiges Anwendungsgebiet ist die elektronische Reproduktionstechnik, bei der sehr große Bilddatenmengen verarbeitet werden. In der Reproduktionstechnik werden Druckvorlagen für Druckseiten erzeugt, die alle zu druckenden Seitenelemente wie Texte, Grafiken und Bilder enthalten. Im Fall der elektronischen Herstellung der Druckvorlagen liegen diese Elemente in Form von digitalen Daten vor. Für ein Bild werden die Daten z.B. erzeugt, indem das Bild in einem Scanner punkt- und zeilenweise abgetastet wird, jeder Bildpunkt in Farbkomponenten zerlegt wird und die Farbwerte dieser Komponenten digitalisiert werden. Die Daten für Texte und Grafiken werden im allgemeinen von Textverarbeitungs- und Zeichenprogrammen direkt in einem Rechner erzeugt. Je nach dem später verwendeten Ausgabeprozeß, z.B. Ausgabe auf einem Farbdrucker oder Drucken in einer konventionellen Druckmaschine, werden die Daten für die Seitenelemente in den Farbkomponenten Rot, Grün und Blau (RGB) oder in den Druckfarben des Vierfarbdrucks Cyan, Magenta, Gelb und Schwarz (CMYK) erzeugt und gespeichert.

Im weiteren Arbeitsablauf werden die digitalisierten Texte, Grafiken und Bilder in einer Bearbeitungsstation unter Sichtkontrolle auf einem Farbmonitor oder automatisch nach gespeicherten Layoutvorgaben elektronisch montiert, d.h. die Seitenelemente werden z.B. in einem Speicherbereich der Bearbeitungsstation entsprechend dem Layout zu einer Druckseite zusammengestellt. Die fertige Druckseite wird dabei in ein für die Ausgabe geeignetes Datenformat umgewandelt und gespeichert. Die Druckseitendaten für jede der Druckfarben (RGB bzw. CMYK) werden als Farbauszugdaten bezeichnet. Mit den Farbauszugdaten werden Druckplatten für eine konventionelle Druckmaschine hergestellt oder sie werden direkt zu einem schnellen Farbdrucker oder zu einer digitalen Druckmaschine übertragen und dort ausgedruckt. Eine ausreichende Auflösung für die Farbauszugdaten der Druckseiten ist z.B. 24 Bildpunkte/mm (600 Bildpunkte/Zoll). Werden je Bildpunkt vier Farbwerte gespeichert (CMYK) und die Dichten der Farbwerte mit jeweils 8 bit (= ein Byte) digitalisiert, so ergibt sich für eine Druckseite der Größe DIN A4 eine Datenmenge von

$$210 \text{ mm} \times 297 \text{ mm} \times 24 \times 24 \times 4 = 143.700.480 \text{ Byte}, \tag{1}$$

d.h. ca. 144 Megabyte. Diese Datenmenge multipliziert sich noch mit der Zahl der Seiten in einem Druckprodukt. In der elektronischen Reproduktionstechnik müssen also sehr große Datenmengen verarbeitet werden. Deshalb spielen Verfahren zur effektiven Komprimierung dieser Datenmengen eine große Rolle.

Auf Druckseiten kann man Bereiche mit zwei Typen von Bilddaten unterscheiden, zum einen Bereiche, in denen sehr viele verschiedene von Bildpunkt zu Bildpunkt sich verändernde Farben enthalten sind, z.B. gescannte Bilder, und zum anderen Bereiche, in denen nur zwei Farben enthalten sind, z.B. Text oder Grafiken. Auch in Bereichen, die mehr als zwei Farben enthalten, z.B. farbige Grafiken, gibt es häufig Teilbereiche mit nur zwei Farben. Für die beiden Typen von Bilddaten sind unterschiedliche Komprimierungsverfahren bekannt, die für den jeweiligen Typ optimiert sind, d.h. einen möglichst großen Komprimierungsfaktor erzielen und die Bildinformation nicht oder möglichst wenig verfälschen.

Zur Komprimierung der Bilddaten in Bereichen mit vielen unterschiedlichen Farben sind Verfahren der Transformationscodierung bekannt. Dabei werden die Bilddaten in Blöcke von z.B. 8 x 8 Bildpunkten aufgeteilt, die Blöcke werden in eine Frequenzdarstellung transformiert (ähnlich der Fourier-Transformation), und nur die für die Bildinformation relevanten Frequenzkomponenten werden in codierter Form gespeichert. Ein verbreitetes derartiges Verfahren ist unter der Bezeichnung JPEG (Joint Photographic Engineers Group) bekannt und international standardisiert worden.

In der Europäischen Patentanmeldung EP-A-0 491 556 wird eine erweiterte Transformationscodierung beschrieben, bei der zusätzlich Bilddatenblöcke erkannt werden, die eine einheitliche Farbe haben, z.B. die Hintergrundfarbe Weiß. Solche Blöcke werden nicht der Transformationscodierung unterworfen, sondern ihre Positionen werden mit einer Arithmetischen Codierung codiert und in die Transformations-codierten Daten der übrigen Blöcke eingefügt. Außerdem werden mit einem Kantendetektor Bildpunkte erkannt, die an den Rändern von Schriftzeichen liegen, und ihre Farbe und Position wird ebenfalls mittels einer Arithmetischen Codierung codiert.

Zur Komprimierung der Bilddaten in Bereichen mit zwei Farben sind Verfahren der Lauflängencodierung bekannt, bei denen die Lage und die Länge von Zeilenabschnitten mit gleichfarbigen Bildpunkten codiert wird. Es gibt eindimensional und zweidimensional arbeitende Lauflängencodierungen. Bei den eindimensionalen Verfahren werden in einer Bildzeile aufeinanderfolgende Bildpunkte gleicher Farbe gezählt und diese Lauflängen als Codeworte gespeichert. Bei den zweidimensionalen Verfahren werden die Abweichungen der Lauflängen in der aktuellen Bildzeile von den entsprechenden Lauflängen der vorangegangenen Bildzeile codiert. Für beide Arten der Lauflängencodierung gibt es Verfahren, die in der Faksimile-Übertragungstechnik sehr verbreitet und standardisiert sind. Ein weiteres Verfahren, daß für die Komprimierung von Bilddaten mit zwei Farben geeignet ist, ist unter der Bezeichnung LZW (Lempel, Ziv, Welch) bekannt. Hierbei werden sich wiederholende Folgen von Bildpunkten, die nicht alle gleichfarbig sein müssen, codiert.

In der US Patentschrift US-A-5 267 333 wird ein Verfahren zur Bilddatenkompression beschrieben, bei dem Bilder und Bildteile manuell nach den Kategorien Text, Hintergrundbild und Vordergrundbild sortiert werden. Für die drei Kategorien werden jeweils unterschiedliche Komprimierungsverfahren angewendet, sowohl Transformationscodierungen als auch die standadisierten Faksimile-Codierungen.

Die bekannten Verfahren zur Komprimierung von Bilddaten mit zwei Farben haben den Nachteil, daß sie nicht in einfacher Weise mit einer Transformationscodierung für Bilddaten mit vielen Farben kombiniert werden können. Außerdem ist die Komprimierung der bekannten Verfahren für zweifarbige Bilddaten bei den hohen Auflösungen, die in der elektronischen Reproduktionstechnik verwendet werden, nicht effektiv genug. Grundsätzlich könnte die Transformationscodierung auch auf die gesamte Druckseite angewendet werden. In den zweifarbigen Bildbereichen wäre der erzielbare Komprimierungsfaktor dann aber gering, und die dekomprimierten Bilddaten wären außerdem mit nicht tolerierbaren Fehlern behaftet. Umgekehrt könnte z.B. auch das LZW-Verfahren auf die gesamte Druckseite angewendet werden. Dann wäre der erzielbare Komprimierungsfaktor in den vielfarbigen Bildbereichen gering.

Es ist daher die Aufgabe der vorliegenden Erfindung, die Nachteile der bekannten Verfahren zur Komprimierung von zweifarbigen Bilddaten zu vermeiden und ein effektives und einfach zu realisierendes Verfahren anzugeben, das zweifarbige Bilddaten ohne Fehler komprimiert und für die Kombination mit einer Transformationscodierung zur Komprimierung vielfarbiger Bilddaten geeignet ist. Diese Aufgabe wird durch die Merkmale des Anspruchs 1 und der Unteransprüche 2 bis 14 gelöst.

Die Erfindung wird nachfolgend anhand der Figuren 1 bis 16 näher beschrieben. Es zeigen:

Fig. 1      einen vergrößerten Ausschnitt aus einem Bildbereich mit zwei Farben,

Fig. 2      die Aufteilung des zweifarbigen Bildbereichs in Bildpunkte und Blöcke von Bildpunkten,

Fig. 3      die Codierung der Vordergrundfarbe und Hintergrundfarbe eines Zweifarb-Blocks,

Fig. 4      die Codierung der Blockfarbe eines Einfarb-Blocks,

Fig. 5      die Codierung einer Folge von Einfarb-Blöcken,

Fig. 6      den Aufbau des Befehlscodeworts für einen Zweifarb-Block,

Fig. 7      ein Beispiel für die Codierung eines Zweifarb-Blocks,

Fig. 8      die Codierung einer Folge von Zweifarb-Blöcken,

Fig. 9      die Codierung eines Zweifarb-Blocks mit einer Unterabtastung um den Faktor 2,

Fig. 10     die Codierung eines Zweifarb-Blocks mit einer Unterabtastung um den Faktor 4,

Fig. 11     die Codierung zum Überspringen einer Folge von Vielfalt-Blöcken,

Fig. 12     die Aufteilung eines Vielfarb-Einfarb-Blocks in einen Vielfarb-Teilblock und einen Zweifarb-Teilblock,

Fig. 13     die Codierung für die Transparenz der Hintergrundfarbe in Zweifarb-Blöcken,

Fig. 14     die Codierung für die Nicht-Transparenz der Hintergrundfarbe in Zweifarb-Blöcken,

Fig. 15     die Codierung für den Modus "Direkt",

und

Fig. 16     die Codierung für den Modus "Direkt" mit einer Unterabtastung um den Faktor 2.

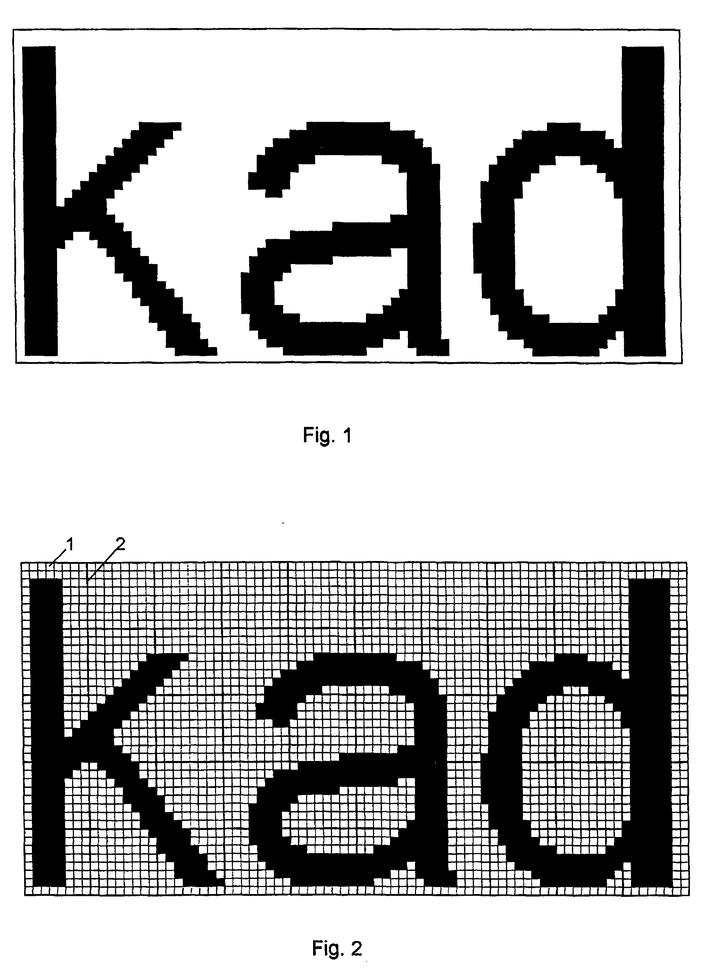

Fig. 1 zeigt einen vergrößerten Ausschnitt aus einem Bildbereich mit zwei Farben, in diesem Fall einen schwarzen Text auf weißem Hintergrund. Die Farben des zweifarbigen Bildbereichs sind hier also Schwarz als Vordergrundfarbe und Weiß als Hintergrundfarbe. Die beiden Farben könnten auch beliebige andere Farben sein, z.B. Dunkelblau als Vordergrundfarbe und Hellgelb als Hintergrundfarbe. Im folgenden wird vorausgesetzt, daß die Bilddaten nach ihren Farbauszugkomponenten (RGB bzw. CMYK) getrennt vorliegen, d.h. für ein RGB-Bild mit N Zeilen und M Bildpunkten je Zeile und einem Byte je Farbkomponente sind alle Rot-Komponenten der Bildpunkte zu einem Farbauszugbild von M x N Bytes zusammengefaßt. Ebenso sind alle Grün-Komponenten und alle Blau-Komponenten des Bildes jeweils zu einem Farbauszugbild von M x N Bytes zusammengefaßt. Diese Farbauszugbilder können für die Komprimierung der Bilddaten wie drei getrennte "Grauwertbilder" von je M x N Bytes betrachtet werden, nur daß die Bytewerte in diesem Fall keine wirklichen Grauwerte sind sondern Dichtewerte der entsprechenden Druckfarben. In einer bevorzugten Ausführungsform des erfindungsgemäßen Komprimierungsverfahrens für zweifarbige Bilddaten werden die Farbauszugbilder getrennt komprimiert. Das kann parallel durch mehrere Komprimierungseinheiten oder nacheinander durch eine Komprimierungseinheit erfolgen. Diese Ausführungsform wird im folgenden beschrieben, wobei davon ausgegangen wird, daß ein zu komprimierendes Farbauszugbild als Matrix von M x N Bytes vorliegt.

Fig. 2 zeigt die Bildpunkte (1) eines Farbauszugbilds des Ausschnitts aus Fig. 1. Nach dem erfindungsgemäßen Verfahren werden die Bildpunkte in Blöcke (2) aufgeteilt, vorzugsweise Blöcke mit 8 x 8 Bildpunkten. Man sieht am Beispiel von Fig. 2, daß es Blöcke gibt, in denen alle Bildpunkte nur eine Farbe haben. Solche Blöke werden als Einfarb-Blöcke bezeichnet. Daneben gibt es Blöcke, in denen sowohl Bildpunkte der Vordergrundfarbe als auch Bildpunkte der Hintergrundfarbe vorkommen. Solche Blöcke werden als Zweifarb-Blöcke bezeichnet.

Bei der Komprimierung werden im Bild horizontal aufeinanderfolgende Blöcke der Reihe nach codiert. Zur Codierung der Farben, Lauflängen, Blockstrukturen usw. werden eins oder mehrere aufeinanderfolgende Codeworte verwendet. Jede Codewortfolge besteht entweder aus einem Befehlscodewort allein oder aus einem Befehlscodewort und folgenden Datenworten. Aus dem Befehlscodewort ergibt sich, ob Datenworte folgen und wieviele es gegebenenfalls sind. Die ersten Bits in einem Befehlscodewort kennzeichnen in eindeutiger Weise, was mit der Codewortfolge codiert wird. Alle Befehlscodewörter und alle Datenwörter sind jeweils ein Byte lang.

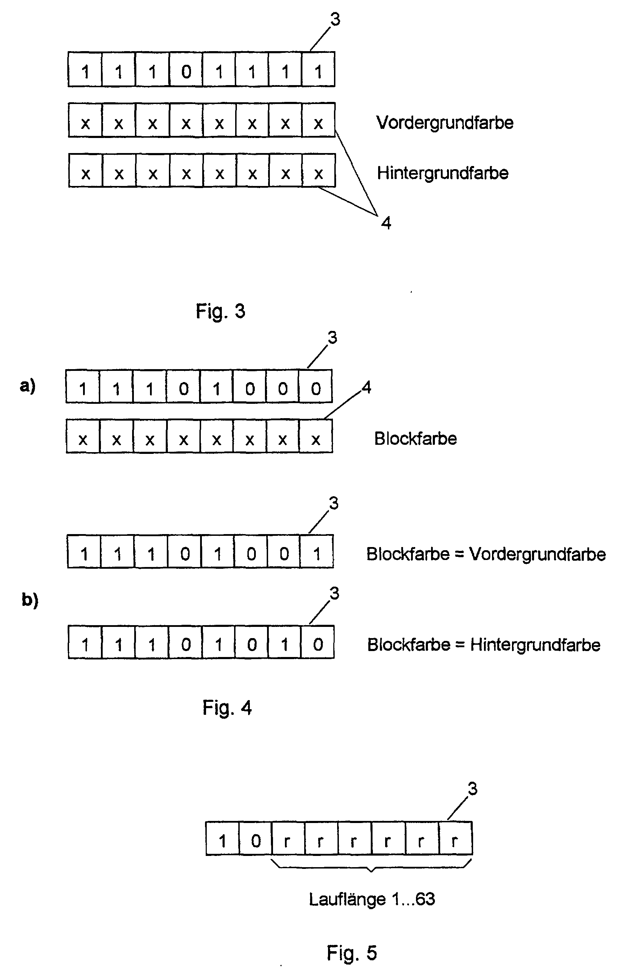

Fig. 3 zeigt die Codewortfolge zur Codierung der Vordergrundfarbe und Hintergrundfarbe in den Zweifarb-Blöcken. Sie besteht aus einem Befehlscodewort (3) und zwei folgenden Datenworten (4). Das erste Datenwort ist die Dichte der Vordergrundfarbe in dem gerade bearbeiteten Farbauszugbild. Das zweite Datenwort ist die entsprechende Dichte der Hintergrundfarbe. Diese Codewortfolge wird einmal zu Beginn der Komprimierung in den komprimierten Daten abgespeichert. Sie wird erneut in die komprimierten Daten eingefügt, wenn sich die Vordergrundfarbe oder Hintergrundfarbe ändert. Das heißt, für den Dekomprimierungsvorgang gelten die codierten Farben für alle folgenden Zweifarb-Blöcke solange, bis eine neue Codewortfolge zur Codierung der Vordergrund- und Hintergrundfarbe auftritt.

Fig. 4a und 4b zeigen zwei Möglichkeiten, die zur Codierung der Blockfarbe der Einfarb-Blöcke vorgesehen sind. Eine Codierungsmöglichkeit besteht aus einem Befehlscodewort (3) gefolgt von einem Datenwort (4), das die Dichte der Blockfarbe angibt (Fig. 4a). Die andere kompaktere Codierungsmöglichkeit wird verwendet, wenn die Vordergrundfarbe und Hintergrundfarbe der Zweifarb-Blöcke schon in den komprimierten Daten gespeichert wurden. Mit einem von zwei möglichen Befehlscodewörtern (3), ohne ein folgendes Datenwort, wird codiert, ob die Blockfarbe gleich der Vordergrundfarbe oder gleich der Hintergrundfarbe der Zweifarb-Blöcke ist (Fig. 4b). Auch die Codierung der Blockfarbe gilt für alle folgenden Einfarb-Blöcke solange, bis sich die Blockfarbe ändert und eine neue Codierung der Blockfarbe in die komprimierten Daten eingefügt wird.

Fig. 5 zeigt die Codierung für aufeinanderfolgende Einfarb-Blöcke gleicher Farbe. Ein Befehlscodewort (3) enthält in den letzten 6 bit eine Lauflänge von 1 bis 63, die angibt, wieviele gleichfarbige Einfarb-Blöcke aufeinander folgen. Ist eine Folge von Einfarb-Blöcken länger als 63, wird sie in mehrere Lauflängen der Länge 63 und eine Restlauflänge aufgeteilt. Für jede Teillauflänge wird ein Befehlscodewort nach Fig. 5 in die komprimierten Daten eingefügt. Im Beispiel von Fig. 2 enthält die oberste Blockreihe eine Lauflänge von Einfarb-Blöcken mit der Hintergrundfarbe.

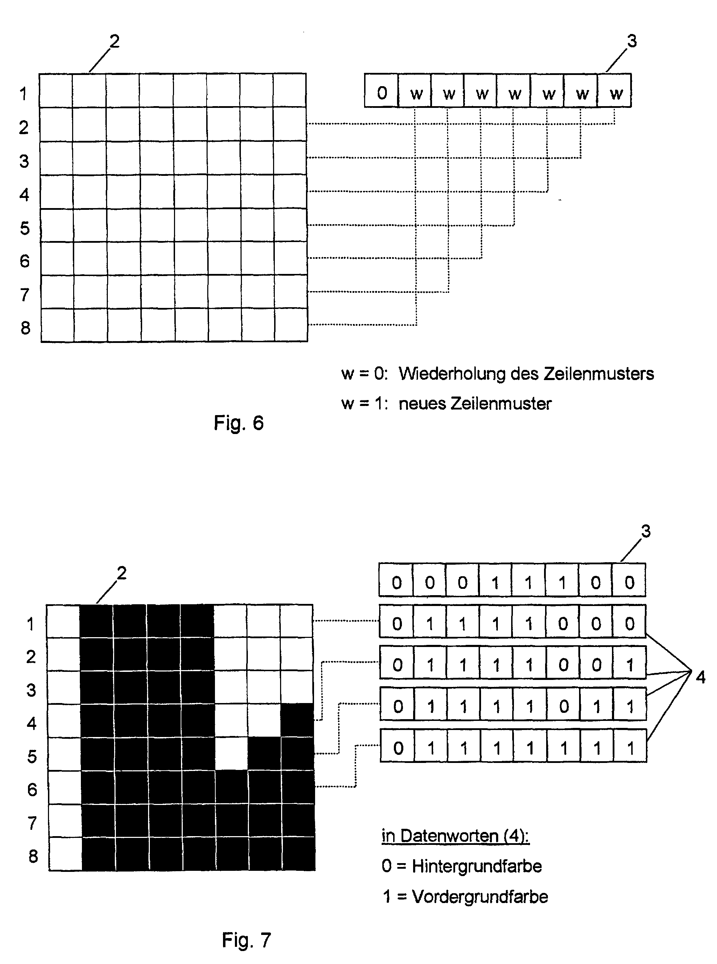

Fig. 6 zeigt den Aufbau des Befehlscodeworts (3) für die Codierung eines Zweifarb-Blocks (2). Nach dem erfindungsgemäßen Verfahren wird in einem Zweifarb-Block geprüft, ob das Verteilungsmuster von Vordergrundfarbe und Hintergrundfarbe in den Zeilen 2 bis 8 des Blocks (2) jeweils gleich der Verteilung in der vorherigen Zeile ist oder verschieden. Diese Information wird in den letzten 7 Bit des Befehlscodeworts codiert. Jeder der Zeilen 2 bis 8 im Block (2) ist eins der letzten 7 Bit im Befehlscodewort (3) zugeordnet. Eine logische 0 in dem Bit kennzeichnet, daß die entsprechende Zeile eine Wiederholung der vorangegangenen Zeile ist. Eine logische 1 kennzeichnet, daß die entsprechende Zeile ein neues Muster aus Vordergrundfarbe und Hintergrundfarbe enthält. Das Verteilungsmuster der ersten Zeile im Block und derjenigen Zeilen 2 bis 8, die keine Wiederholungen sind, werden als Datenworte an das Befehlscodewort (3) angehängt.

Fig. 7 zeigt die Codierung eines Zweifarb-Blocks noch einmal an einem Beispiel. Das Befehlscodewort (3) enthält im letzten und vorletzten Bit eine logische 0, weil die Zeilen 2 und 3 des Blocks (2) Wiederholungen der Zeile 1 sind. Die Zeilen 4, 5 und 6 enthalten ein neues Verteilungsmuster von Vordergrundfarbe und Hintergrundfarbe im Vergleich zur jeweils vorhergehenden Zeile. Die zugehörigen Bits im Befehlscodewort sind deshalb auf eine logische 1 gesetzt. Die Zeilen 7 und 8 sind Wiederholungen der Zeile 6. Die zugehörigen Bits im Befehlscodewort sind deshalb auf eine logische 0 gesetzt. In dem Beispiel folgen dementsprechend vier Datenworte (4) auf das Befehlscodewort. Die Datenworte enthalten Bitmuster für die sich nicht wiederholenden Zeilen 1, 4, 5, und 6. Jedes Bit in einem Bitmuster steht für einen entsprechenden Bildpunkt und kennzeichnet, ob der Bildpunkt die Hintergrundfarbe enthält (= logisch 0) oder die Vordergrundfarbe enthält (=logisch 1). Die Codierung für einen Zweifarb-Block besteht also aus einem Befehlscodewort gefolgt von 1 bis 8 Datenworten. Das erste Datenwort ist immer das Bitmuster für die Zeile 1, die Zahl und Zeilenzuordnung der übrigen Datenworte ergibt sich aus den letzten 7 Bit des Befehlscodeworts.

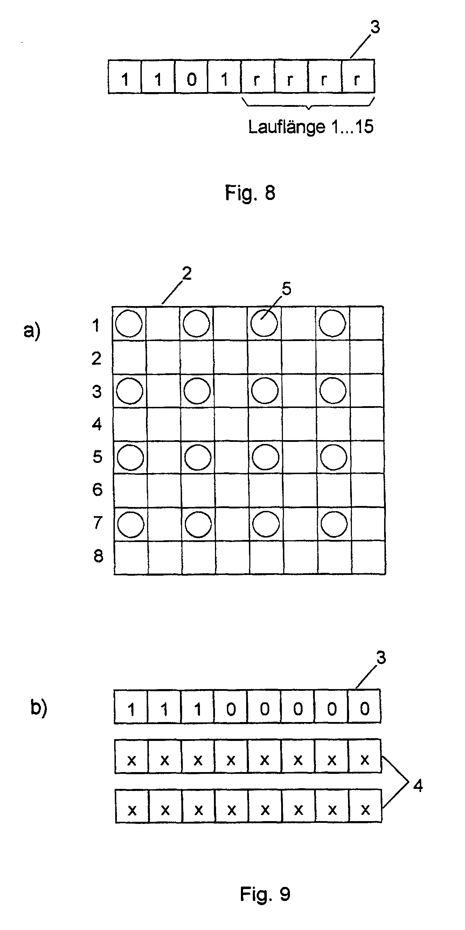

Fig. 8 zeigt die Codierung für eine Folge gleicher Zweifarb-Blöcke, wie sie bei einem waagerechten Strich in einem Text oder einer Grafik auftreten kann. Ein Befehlscodewort (3) enthält in den letzten 4 bit eine Lauflänge von 1 bis 15, die angibt, wie oft sich der darauffolgend codierte Zweifarb-Block wiederholt. Alternativ kann die Lauflänge auch angeben, wie oft sich der zuletzt codierte Zweifarb-Block wiederholt. Es ist eine Frage des Realisierungsaufwands, welche Alternative gewählt wird. Ist eine Folge länger als 15, wird sie in mehrere Lauflängen der Länge 15 und eine Restlauflänge aufgeteilt und die Codierung wird entsprechend oft wiederholt.

Es gibt in Druckseiten Bereiche mit zweifarbigen Bilddaten, für die eine geringere Auflösung toleriert werden kann. Das sind Bereiche, in denen zwei eng beieinanderliegende Farben vorkommen, d.h. der Kontrast zwischen den beiden Farben sehr gering ist. Solche Bereiche sind z.B. Farbverläufe, die über eine größere Fläche einen gleichmäßigen Übergang von einer Farbe zu einer anderen Farbe enthalten. Zwar kommen darin viele Zwischenfarben vor, aber in einem lokalen Bereich von der Größe einiger 8 x 8 Blöcke gibt es in der Regel doch nur zwei Farben. In solchen Bereichen kann die Komprimierung noch weiter erhöht werden, indem auch die Auflösung reduziert wird. Das erfindungsgemäße Komprimierungsverfahren sieht für diesen Fall spezielle Codierungen vor.

Fig. 9a zeigt einen Zweifarb-Block (2), dessen Auflösung durch Unterabtastung um den Faktor 2 in horizontaler und vertikaler Richtung reduziert wird. Dazu werden nur die Farben der mit einem Kreis markierten Bildpunkte (5) codiert. Fig. 9b zeigt die zugehörige Codewortfolge, die aus einem Befehlscodewort (3) und zwei Datenworten (4) besteht. Jedem der 16 Bit in den beiden Datenworten ist einer der unterabgetasteten Bildpunkte (5) zugeordnet, und das Bit kennzeichnet, ob der entsprechende Bildpunkt die Hintergrundfarbe enthält (= logisch 0) oder die Vordergrundfarbe enthält (=logisch 1). Für diese Zweifarb-Block Codierung mit reduzierter Auflösung ist aus Gründen einer einfachen Realisierung keine Prüfung vorgesehen, ob sich Zeilen des Blocks in vertikaler Richtung wiederholen, da sich die Bilddaten dadurch nicht mehr wesentlich weiter komprimieren lassen. Eine Variante mit einer solchen Prüfung und entsprechender Codierung analog zu einem Zweifarb-Block ohne Reduzierung der Auflösung (Fig. 6 und Fig. 7) ist aber selbstverständlich denkbar.

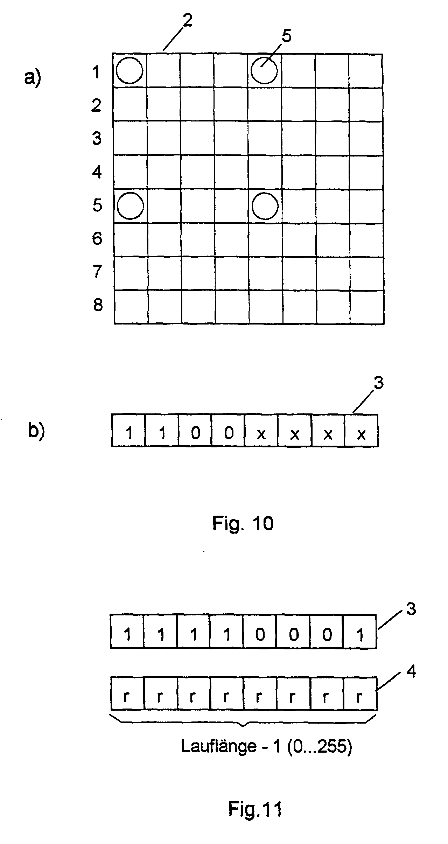

Fig. 10 zeigt die Codierung für den Fall, daß die Auflösung eines Zweifarb-Blocks um den Faktor 4 in horizontaler und vertikaler Richtung reduziert wird. In Fig. 10a sind die unterabgetasteten Bildpunkte (5) mit einem Kreis markiert. Fig. 10b zeigt die zugehörige Codierung, die aus einem Befehlscodewort (3) besteht, in dem den letzten vier Bit jeweils einer der unterabgetasteten Bildpunkte (5) zugeordnet ist, und das Bit kennzeichnet, ob der entsprechende Bildpunkt die Hintergrundfarbe enthält (= logisch 0) oder die Vordergrundfarbe enthält (=logisch 1). Eine Folge gleicher Zweifarb-Blöcke mit reduzierter Auflösung wird ebenfalls als Lauflänge nach Fig. 8 codiert.

Da das erfindungsgemäße Komprimierungsverfahren für zweifarbige Bilddaten mit Blöcken von vorzugsweise 8 x 8 Bildpunkten arbeitet, ist es sehr gut für eine Kombination mit einer Transformationscodierung wie z.B. dem JPEG Verfahren für vielfarbige Bilddaten geeignet, das ebenfalls mit Blöcken von 8 x 8 Bildpunkten arbeitet. Enthalten die Bilddaten sowohl Bereiche mit vielen Farben (typischerweise Bilder) als auch Bereiche mit nur zwei Farben (typischerweise Text und Grafik), so können sie zunächst unabhängig von dem später anzuwendenden Komprimierungsverfahren in Blöcke von 8 x 8 Bildpunkten aufgeteilt werden. Durch eine einfache Analyse vor der Komprimierung wird für jeden Block festgestellt, ob er Bildpunkte mit vielen Farben oder Bildpunkte mit nur zwei bzw. nur einer Farbe enthält. Die Vielfarb-Blöcke werden dann z.B. mit dem JPEG Verfahren komprimiert und die Einfarb- bzw. Zweifarb-Blöcke mit dem erfindungsgemäßen Verfahren. Auf diese Weise werden beide Blocktypen mit einem hohen Komprimierungsfaktor und sehr guter Bildqualität codiert. Die Einfarb- und Zweifarb-Blöcke werden dabei ohne Qualitätsverlust komprimiert (wenn keine Reduzierung der Auflösung vorgenommen wird), was für Text und Grafik besonders wichtig ist.

Für die Kombination mit einer Transformationscodierung für Vielfarb-Blöcke sind in dem erfindungsgemäßen Komprimierungsverfahren für zweifarbige Bilddaten noch spezielle Codeworte vorgesehen, die das Zusammenarbeiten mit einem anderen Komprimierungsverfahren für Vielfarb-Blöcke erleichtern.

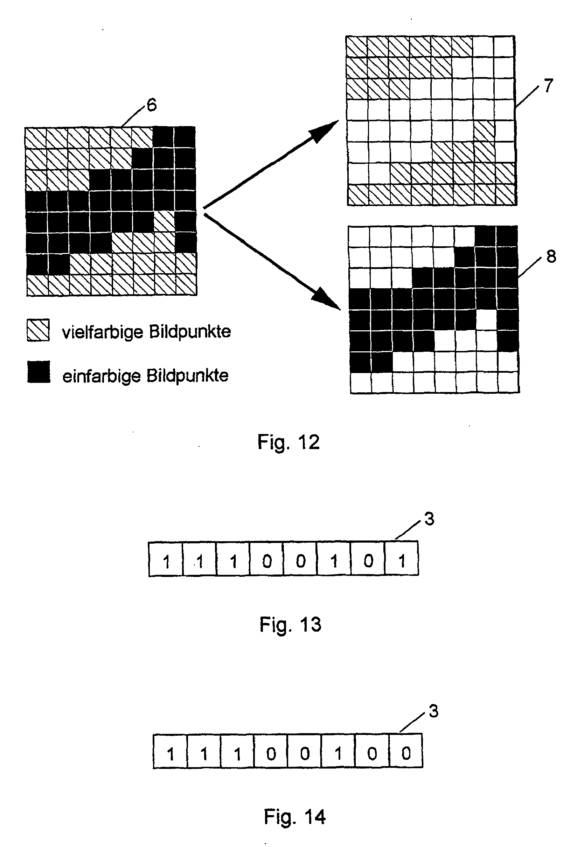

Fig. 11 zeigt die Codierung für den Fall, daß eine bestimmte Zahl von Vielfarb-Blöcken übersprungen werden soll, die zwischen dem zuletzt codierten Einfarb-bzw. Zweifarb-Block und dem nächsten zu codierenden Einfarb- bzw. Zweifarb-Block liegen. Auf ein Befehlscodewort (3) folgt ein Datenwort (4), das eine Zahl von 0 bis 255 enthält. Diese Zahl gibt die um Eins verminderte Lauflänge der zu überspringenden Vielfarb-Blöcke an.

In Bilddaten, die sowohl Bilder als auch Text enthalten, kommt es häufig vor, daß einfarbiger Text einem Bild überlagert ist. Dadurch entstehen 8 x 8 Blöcke, von denen ein Teil der Bildpunkte vielfarbig ist und der restliche Teil der Bildpunkte einfarbig ist. Würden solche Blöcke mit dem JPEG Verfahren komprimiert, würden bedingt durch die für eine Transformationscodierung typischen Rekonstruktionsfehler bei der Dekomprimierung die Textränder verfälscht. Der Text würde seine Randschärfe verlieren. Mit dem erfindungsgemäßen Verfahren kann der Textanteil in dem 8 x 8 Block fehlerfrei komprimiert werden. Dazu wird der gemischte Vielfarb-Einfarb-Block in zwei Teilblöcke aufgespalten, einen Teilblock, der die vielfarbigen Bildpunkte des Bildanteils enthält und einen Teilblock, der die einfarbigen Bildpunkte des Textanteils enthält.

Fig. 12 zeigt die Aufteilung eines Vielfarb-Einfarb-Blocks (6) in einen Vielfarb-Teilblock (7) und einen Zweifarb-Teilblock (8). Zur Bildung des Zweifarb-Teilblocks werden die vielfarbigen Bildpunkte durch die Hintergrundfarbe ersetzt. Der Vielfarb-Teilblock (7) wird mit dem JPEG Verfahren komprimiert, und der Zweifarb-Teilblock (8) wird mit dem erfindungsgemäßen Verfahren nach Fig. 6 und Fig. 7 komprimiert. Im Unterschied zu einem normalen Zweifarb-Block werden jedoch die Bildpunkte mit der Hintergrundfarbe bei der Dekomprimierung mit den Bildpunkten des dekomprimierten Vielfarb-Teilblocks aufgefüllt. Um der Dekomprimierungseinrichtung die Information über die andere Behandlung der Hintergrundfarbe zu übermitteln, wird ein Befehlscodewort für "Transparenz" eingefügt. Es bedeutet, daß in den folgenden Zweifarb-Blöcken die Bildpunkte mit der Hintergrundfarbe als transparent zu behandeln sind, wenn der dekomprimierte Zweifarb-Teilblock dem dekomprimierten Vielfarb-Teilblock überlagert wird, um den gemischten Vielfarb-Einfarb-Block zu rekonstruieren. Fig. 13 zeigt das Befehlscodewort (3) für Transparenz. Zum Zurückschalten auf den nicht transparenten Mode wird ein Befehlscodewort "Nicht-Transparenz" eingefügt. Es bedeutet, daß in den folgenden Zweifarb-Blöcken die Hintergrundfarbe als nicht-transparent zu behandeln ist, d.h. so wie es im Zusammenhang mit Fig. 6 und Fig. 7 erläutert wurde. Fig. 14 zeigt das Befehlscodewort (3) für Nicht-Transparenz.

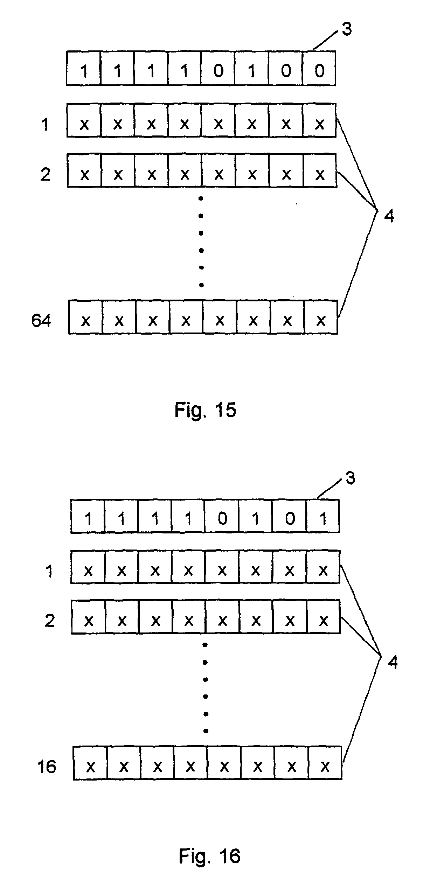

In Sonderfällen kann es erforderlich sein, einen Block von 8 x 8 Bildpunkten direkt als Matrix von Farbauszugdichten abzuspeichern, z.B. wenn er mehr als zwei Farben enthält und deshalb nicht mit der Zweifarb-Komprimierung codiert werden kann, aber andererseits auch nicht mit dem JPEG Verfahren codiert werden soll, um ihn nicht zu verfälschen. Für diesen Fall sieht das erfindungsgemäße Verfahren einen Modus "Direkt" vor, dessen Codierung in Fig. 15 gezeigt ist. Nach dem einleitenden Befehlscodewort (3) folgen 64 Datenworte (4), die die Farbauszugdichten der 64 Bildpunkte enthalten. Dieser Modus kann auch mit einer Reduzierung der Auflösung um den Faktor 2 in horizontaler und vertikaler Richtung kombiniert werden, so daß nur die Farbauszugdichten der 16 unterabgetasteten Bildpunkte (5) gemäß Fig. 9a an das Befehlscodewort angehängt werden. Fig. 16 zeigt die entsprechende Codierung.

Das erfindungsgemäße Verfahren wurde für die getrennte Komprimierung von Farbauszugbildern beschrieben. Es ist jedoch auch mit anders sortierten Datenformaten der Bilddaten durchführbar, z.B. mit einem Datenformat, bei dem für jeden Bildpunkt jeweils drei (RGB) bzw. vier (CMYK) Farbauszug-Bytes hintereinander abgespeichert sind. In den zuvor erläuterten Codewortfolgen wird dann nur jedes Datenwort, das eine Farbauszugdichte enthält, durch die Angabe der Farbe mit drei bzw. vier Bytes ersetzt.

Das erfindungsgemäße Verfahren ist auch nicht auf die Codierung von Blöcken mit 8 x 8 Bildpunkten beschränkt. Es kann auf beliebige auch nicht quadratische Blockgrößen angewendet werden, wenn die Länge der Befehlscodewörter und Datenwörter für die Codierung von Zweifarb-Blöcken (Fig. 6, Fig. 7, Fig. 9, Fig. 10) und die Anzahl der Datenwörter für die "Direkt"-Codierung der Blöcke (Fig. 15, Fig. 16) entsprechend angepaßt wird.

Ebenso ist die Belegung der nicht veränderlichen Bits in den Befehlscodewörtern nicht auf die in den Figuren dargestellten Belegungen eingeschränkt. Sie kann anders gewählt werden, solange die verschiedenen Befehlscodewörter unterscheidbar bleiben.

**Patentansprüche**

1. Verfahren zur Komprimierung von digitalen Bilddaten, die als Matrix von M x N Bildpunkten (1) vorliegen, auf eine reduzierte Datenmenge, **dadurch gekennzeichnet, daß**

   a) die Matrix von M x N Bildpunkten (1) in Blöcke (2) von u x v Bildpunkte aufgeteilt wird,
   b) die Blöcke (2) klassifiziert werden in

   - Einfarb-Blöcke, die nur Bildpunkte einer Block-Farbe enthalten,
   - Zweifarb-Blöcke, die Bildpunkte einer Vordergrundfarbe und Bildpunkte einer Hintergrundfarbe enthalten, und
   - Vielfarb-Blöcke, die Bildpunkte mit mehr als zwei Farben enthalten, und

   c) in den Bilddaten der Einfarb-Blöcke und Zweifarb-Blöcke mittels Befehlscodeworten (3) und Datenworten (4) Bildpunktmuster codiert werden, die sich von Block zu Block oder innerhalb eines Blocks wiederholen.

2. Verfahren nach Anspruch 1, **dadurch gekennzeichnet, daß** aufeinanderfolgende Einfarb-Blöcke mit der gleichen Blockfarbe als Lauflängen codiert werden.

3. Verfahren nach Anspruch 1, **dadurch gekennzeichnet, daß** Zweifarb-Blöcke als Bitmuster codiert werden, wobei jedem Bit des Bitmusters ein Bildpunkt des Zweifarb-Blocks zugeordnet ist und die Bits des Bitmusters kennzeichnen, ob der zugeordnete Bildpunkt die Vordergrundfarbe oder die Hintergrundfarbe hat.

4. Verfahren nach Anspruch 3, **dadurch gekennzeichnet, daß** das Bitmuster nur Bits für die Bildpunkte solcher Zeilen des Zweifarb-Blocks enthält, deren Verteilung von Vordergrundfarbe und Hintergrundfarbe anders ist als die entsprechende Verteilung in der vorangegangenen Zeile des Zweifarb-Blocks.

5. Verfahren nach Anspruch 3, **dadurch gekennzeichnet, daß** das Bitmuster nur Bits für eine Teilmenge von unterabgetasteten Bildpunkten (5) des Zweifarb-Blocks enthält.

6. Verfahren nach einem der Ansprüche 1 bis 5, **dadurch gekennzeichnet, daß** aufeinanderfolgende Zweifarb-Blöcke mit dem gleichen Bitmuster als Lauflängen codiert werden.

7. Verfahren nach einem der Ansprüche 1 bis 6, **dadurch gekennzeichnet, daß** die Blockfarbe der Einfarb-Blöcke in verschiedenen Bereichen der Bilddaten unterschiedlich ist.

8. Verfahren nach einem der Ansprüche 1 bis 7, **dadurch gekennzeichnet, daß** die Vordergrundfarbe und die Hintergrundfarbe in verschiedenen Bereichen der Bilddaten unterschiedlich sind.

9. Verfahren nach einem der Ansprüche 1 bis 8, **dadurch gekennzeichnet, daß** aufeinanderfolgende Vielfarb-Blöcke, die bei der Komprimierung der Einfarb-Blöcke und Zweifarb-Blöcke übersprungen werden sollen, als Lauflängen codiert werden.

10. Verfahren nach einem der Ansprüche 1 bis 9, **dadurch gekennzeichnet, daß** Vielfarb-Blöcke mit einem Verfahren der Transformationscodierung (z.B. JPEG) komprimiert werden.

11. Verfahren nach einem der Ansprüche 1 bis 10, **dadurch gekennzeichnet, daß** Vielfarb-Blöcke nicht komprimiert werden.

12. Verfahren nach einem der Ansprüche 1 bis 11, **dadurch gekennzeichnet, daß** in einem Vielfarb-Block ein Teil der Bildpunkte durch die Hintergrundfarbe ersetzt wird und der Block dann wie ein Zweifarb-Block codiert wird.

13. Verfahren nach einem der Ansprüche 1 bis 11, **dadurch gekennzeichnet, daß** in einem Vielfarb-Block ein Teil der Bildpunkte durch eine beliebige Farbe ersetzt wird und der Block dann wie ein Vielfarb-Block codiert wird.

14. Verfahren nach einem der Ansprüche 1 bis 13, **dadurch gekennzeichnet, daß** für die Hintergrundfarbe die Eigenschaft Transparenz oder Nicht-Transparenz codiert wird.

**Claims**

1. Method for compressing digital image data presented as a matrix of M x N image dots (1) into a reduced dataset, **characterized in that**

   a) the matrix of M x N image dots (1) is split up into blocks (2) of u x v image dots.
   b) the blocks (2) are classified as

   - single-colour blocks only containing image dots of one block colour.
   - two-colour blocks containing image dots of one foreground colour and image dots of one background colour and
   - multi-colour blocks containing image dots with more than two colours. and

   c) in the image data of the single-colour blocks and two-colour blocks. image-dot patterns which are repeated from block to block or within a block are coded by means of instruction code words (3) and data words (4).

2. Method according to Claim 1, **characterized in that** successive single-colour blocks with the same block colour are coded as run lengths.

3. Method according to Claim 1, **characterized in that** two-colour blocks are coded a bit patterns wherein an image dot of the two-colour block is assigned to each bit of the bit pattern and the bits of the bit pattern identify whether the assigned image dot has the foreground colour or the background colour.

4. Method according to Claim 3, **characterized in that** the bit pattern only contains bits for the image dots of those lines of the two-colour block whose distribution of foreground colour and background colour differs from the corresponding distribution in the preceding line of the two-colour block,

5. Method according to Claim 3, **characterized in that** the bit pattern only contains bits for a subset of subsampled image dots (5) of the two-colour block.

6. Method according to any one of Claims 1 to 5, **characterized in that** successive two-colour blocks with the same bit pattern are coded as run lengths.

7. Method according to any one of Claims 1 to 6, **characterized in that** the block colour of the single-colour blocks is different in different areas of the image data.

8. Method according to any one of Claims 1 to 7, **characterized in that** the foreground colour and background colour are different in different areas of the image data.

9. Method according to any one of Claims 1 to 8, **characterized in that** successive multi-colour blocks that are to be skipped in the compression of the single-colour blocks and two-colour blocks are coded as run lengths

10. Method according to any one of Claims 1 to 9, **characterized in that** multi-colour blocks are compressed by a method of transformation coding (such as JPEG).

11. Method according to any one of Claims 1 to 10, **characterized in that** multi-colour blocks are not compressed.

12. Method according to any one of Claims 1 to 11, **characterized in that** in a multi-colour block the background colour is substituted for some of the image dots and the block is then coded as a two-colour block.

13. Method according to any one of Claims 1 to 11, **characterized in that** in a multi-colour block any chosen colour is substituted for some of the image dots and the block is then coded as a multi-colour block.

14. Method according to any one of Claims 1 to 13, **characterized in that** the property of transparency or non-transparency is coded for the background colour.

**Revendications**

1. Procédé de compression de données d'image numérique existant sous la forme d'une matrice M x N points image (1), pour réduire la quantité de données,
   **caractérisé en ce qu'**

   a) on divise la matrice des M x N points image (1) en blocs (2) composés de u x v points image,
   b) on classe les blocs (2) en

   - blocs monocolores qui ne contiennent que les points image d'une couleur de bloc,
   - les blocs bicolores qui contiennent les points image d'une couleur d'avant-plan et les points image d'une couleur d'arrière-plan et
   - des blocs multicolores qui contiennent des points image de plus de deux couleurs et
   - dans les données image des blocs monocolores et des blocs bicolores on code les modèles de points image avec des mots de code d'ordre (3) et des mots de données (4), qui se répètent d'un bloc à l'autre ou à l'intérieur d'un bloc.

2. Procédé selon la revendication 1,
   **caractérisé en ce qu'**
   on code les blocs monocolores successifs de la même couleur de bloc comme longueur de passage.

**3.** Procédé selon la revendication 1,
**caractérisé en ce qu'**
on code les blocs bicolores comme modèles de bits, en associant à chaque bit du modèle de bit un point image du bloc bicolore et les bits du modèle de bit indiquent si le point image associé correspond à la couleur de l'avant-plan ou la couleur de l'arrière-plan.

**4.** Procédé selon la revendication 3,
**caractérisé en ce que**
le modèle de bits ne contient que les bits de points image des lignes du bloc bicolore dont la répartition de la couleur de l'avant-plant et de celle de l'arrière-plan est différente de la répartition correspondante dans la ligne amont du bloc bicolore.

**5.** Procédé selon la revendication 3,
**caractérisé en ce que**
le modèle de bits ne contient que les bits d'une quantité partielle de points image (5) sous détectés du bloc bicolore.

**6.** Procédé selon l'une quelconque des revendications 1 à 5,
**caractérisé en ce que**
les blocs bicolores successifs avec le même modèle de bits sont codés comme des longueurs de passage.

**7.** Procédé selon l'une quelconque des revendications 1 à 6,
en ce que la couleur de bloc des blocs monocolores est différente dans différentes zones des données image.

**8.** Procédé selon l'une quelconque des revendications 1 à 7,
**caractérisé en ce que**
la couleur d'avant-plan et la couleur d'amère-plan sont différentes dans différentes zones des données image.

**9.** Procédé selon l'une quelconque des revendications 1 à 8,
**caractérisé en ce que**
les blocs multicolores, successifs, qui doivent être sautés lors de la compression des blocs monocolores et des blocs bicolores, sont codés comme des longueurs de passage.

**10.** Procédé selon l'une quelconque des revendications 1 à 9,
**caractérisé en ce que**
les blocs multicolores sont comprimés avec un procédé de codage à transformation, par exemple le procédé (JPEG).

**11.** Procédé selon l'une quelconque des revendications 1 à 10,
**caractérisé en ce que**
les blocs multicolores ne sont pas comprimés.

**12.** Procédé selon l'une quelconque des revendications 1 à 11,
**caractérisé en ce que**
dans un bloc multicolores on remplace une partie des points image par la couleur de l'arrière-plan et on code alors le bloc comme bloc bicolores.

**13.** Procédé selon l'une quelconque des revendications 1 à 11,
**caractérisé en ce que**
dans un bloc multicolores, on remplace une partie des points image par une couleur quelconque et alors on code le bloc comme un bloc multicolores.

**14.** Procédé selon l'une quelconque des revendications 1 à 13,
**caractérisé en ce que**
pour la couleur de l'arrière-plan on code la propriété transparence ou non transparence.

Fig. 1

Fig. 2

| 1 | 1 | 1 | 0 | 1 | 1 | 1 | 1 |

3

| x | x | x | x | x | x | x | x |  Vordergrundfarbe

| x | x | x | x | x | x | x | x |  Hintergrundfarbe

4

Fig. 3

**a)**

| 1 | 1 | 1 | 0 | 1 | 0 | 0 | 0 |

3

4

| x | x | x | x | x | x | x | x |  Blockfarbe

| 1 | 1 | 1 | 0 | 1 | 0 | 0 | 1 |  Blockfarbe = Vordergrundfarbe

3

**b)**

| 1 | 1 | 1 | 0 | 1 | 0 | 1 | 0 |  Blockfarbe = Hintergrundfarbe

3

Fig. 4

| 1 | 0 | r | r | r | r | r | r |

3

Lauflänge 1...63

Fig. 5

w = 0: Wiederholung des Zeilenmusters

w = 1: neues Zeilenmuster

Fig. 6

in Datenworten (4):

0 = Hintergrundfarbe

1 = Vordergrundfarbe

Fig. 7

| 1 | 1 | 0 | 1 | r | r | r | r |

3

Lauflänge 1...15

Fig. 8

a)

2    5

|   | 1 | 2 | 3 | 4 | 5 | 6 | 7 | 8 |
|---|---|---|---|---|---|---|---|---|

Fig. 9

b)

| 1 | 1 | 1 | 0 | 0 | 0 | 0 | 0 |

3

| x | x | x | x | x | x | x | x |

| x | x | x | x | x | x | x | x |

4

a)

2    5

| 1 | ◯ |  |  |  | ◯ |  |  |  |
| 2 |  |  |  |  |  |  |  |  |
| 3 |  |  |  |  |  |  |  |  |
| 4 |  |  |  |  |  |  |  |  |
| 5 | ◯ |  |  |  | ◯ |  |  |  |
| 6 |  |  |  |  |  |  |  |  |
| 7 |  |  |  |  |  |  |  |  |
| 8 |  |  |  |  |  |  |  |  |

b)

3

| 1 | 1 | 0 | 0 | x | x | x | x |

**Fig. 10**

3

| 1 | 1 | 1 | 1 | 0 | 0 | 0 | 1 |

4

| r | r | r | r | r | r | r | r |

Lauflänge - 1 (0...255)

**Fig.11**

vielfarbige Bildpunkte

einfarbige Bildpunkte

Fig. 12

| 1 | 1 | 1 | 0 | 0 | 1 | 0 | 1 |

Fig. 13

| 1 | 1 | 1 | 0 | 0 | 1 | 0 | 0 |

Fig. 14

Fig. 15

Fig. 16